# EUROPEAN PATENT SPECIFICATION

(11) **EP 2 220 533 B1**
(45) Date of publication and mention of the grant of the patent: **23.11.2011**
(21) Application number: 08861927.5
(22) Date of filing: 11.12.2008
(51) Int. Cl.: G02B 27/00, H04N 9/00

(54) **PROJECTOR USING INDEPENDENT MULTIPLE WAVELENGTH LIGHT SOURCES**
PROJEKTOR MIT UNABHÄNGIGEN LICHTQUELLEN MIT MEHREREN WELLENLÄNGEN
PROJECTEUR UTILISANT DES SOURCES DE LUMIÈRE INDÉPENDANTES À LONGUEURS D'ONDE MULTIPLES

(30) Priority: 14.12.2007 US 956666
(43) Date of publication of application: 25.08.2010
(73) Proprietor: Eastman Kodak Company, Rochester, NY 14650-2201 (US)
(72) Inventor: SILVERSTEIN, Barry David, Rochester New York 14650 (US)
(74) Representative: Weber, Etienne Nicolas
(86) International application number: PCT/US2008/013610
(87) International publication number: WO 2009/078941

(56) References cited:
- EP-A- 1 841 238
- JP-A- 2003 186 112
- US-A- 5 658 060
- US-A1- 2007 103 646
- US-B1- 6 240 116

## Description

### FIELD OF THE INVENTION

This invention generally relates to an apparatus for projecting a stereoscopic digital image and more particularly relates to an improved apparatus and method using independent multiple wavelength to create stereoscopic images for digital cinema projection.

### BACKGROUND OF THE INVENTION

In order to be considered as suitable replacements for conventional film projectors, digital projection systems must meet demanding requirements for image quality. This is particularly true for multicolor cinematic projection systems. Competitive digital projection alternatives to Conventional, cinematic-quality projectors must meet high standards of performance, providing high resolution, wide color gamut, high brightness, and frame-sequential contrast ratios exceeding 1,OOO:I.

Increasingly, the motion picture industry has moved toward the production and display of 3 dimensional (3D) or perceived stereoscopic content in order to offer consumers an enhanced visual experience in large venues. While entertainment companies such as Disney have offered this content in their theme parks for many years and Imax has created specialty theatres for such content, in both those cases film has been the primary medium for image creation. To create the stereo image, two sets of films and projectors simultaneously project orthogonal polarizations, one for each eye. Audience members wear corresponding orthogonally polarized glasses that block one polarized light image for each eye while transmitting the orthogonal polarized light image.

In the ongoing transition of the motion picture industry to digital imaging, some vendors, such as Imax, have continued to utilize a two-projection system to provide a high quality stereo image. More commonly, however, conventional digital projectors have been modified to enable 3D projection.

The most promising of these conventional projection solutions for multicolor digital cinema projection employ, as image forming devices, one of two basic types of spatial light modulators (SLMs). The first type of spatial light modulator is the Digital Light Processor (DLP), a digital micromirror device (DMD), developed by Texas Instruments, Inc., Dallas, TX. DLP devices are described in a number of patents, for example U.S. Patents No. 4,441,791; No. 5,535,047; No. 5,600,383 (all to Hornbeck); and U.S. Patent No. 5,719,695 (Heimbuch). Optical designs for projection apparatus employing DLPs are disclosed in U.S. Patents No. 5,914,818 (Tejada et al.); 5,930,050 (Dewald); 6,008,951 (Anderson); and 6,089,717 (Iwai). DLPs have been successfully employed in digital projection systems.

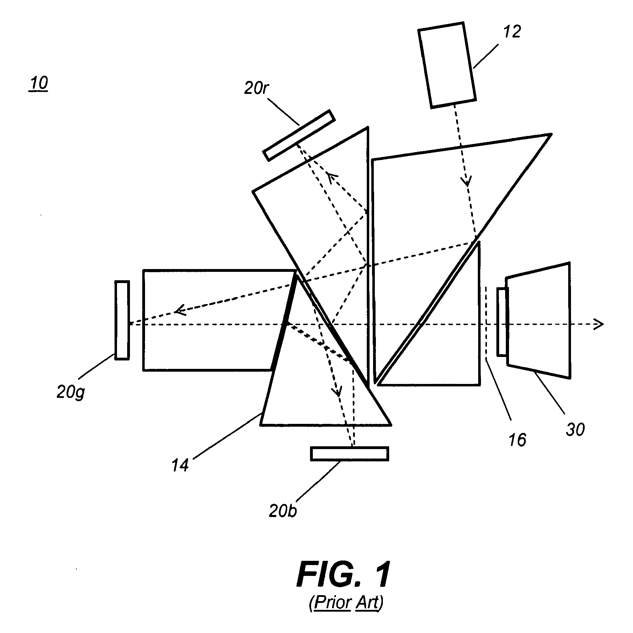

Figure 1 shows a simplified block diagram of a projector apparatus 10 that uses DLP spatial light modulators. A light source 12 provides polychromatic unpolarized light into a prism assembly 14, such as a Philips prism, for example. Prism assembly 14 splits the polychromatic light into red, green, and blue component wavelength bands and directs each band to the corresponding spatial light modulator 20r, 20g, or 20b. Prism assembly 14 then recombines the modulated light from each SLM 20r, 20g, and 20b and provides this unpolarized light to a projection lens 30 for projection onto a display screen or other suitable surface.

DLP-based projectors demonstrate the capability to provide the necessary light throughput, contrast ratio, and color gamut for most projection applications from desktop to large cinema. However, there are inherent resolution limitations, with existing devices typically providing no more than 2148 x 1080 pixels. In addition, high component and system costs have limited the suitability of DLP designs for higher-quality digital cinema projection. Moreover, the cost, size, weight, and complexity of the Philips or other suitable combining prisms are significant constraints. In addition, the need for a relatively fast projection lens with a long working distance, due to brightness requirements, has had a negative impact on acceptability and usability of these devices.

The second type of spatial light modulator used for digital projection is the LCD (Liquid Crystal Device). The LCD forms an image as an array of pixels by selectively modulating the polarization state of incident light for each corresponding pixel. LCDs appear to have advantages as spatial light modulators for high-quality digital cinema projection systems. These advantages include relatively large device size, favorable device yields and the ability to fabricate higher resolution devices, for example 4096 x 2160 resolution devices by Sony and JVC Corporations. Among examples of electronic projection apparatus that utilize LCD spatial light modulators are those disclosed in U.S. Patent No. 5,808,795 (Shimomura et al.); U.S. Patent No. 5,798,819 (Hattori et al.); U.S. Patent No. 5,918,961 (Ueda); U.S. Patent No. 6,010,121 (Maki et al.); and U.S. Patent No. 6,062,694 (Oikawa et al.). LCOS (Liquid Crystal On Silicon) devices are thought to be particularly promising for large-scale image projection. However, LCD components have difficulty maintaining the high quality demands of digital cinema, particularly with regard to color, contrast, as the high thermal load of high brightness projection affects the materials polarization qualities.

Conventional methods for forming stereoscopic images from these conventional micro-display (DLP or LCOS) based projectors have been based around two primary techniques. The less common technique, utilized by Dolby Laboratories, for example, is similar to that described in US Patent Application Publication No. 2007/0127121 by Maximus et. al., where color space separation is used to distinguish between the left and right eye content. Filters are utilized in the white light illumination system to momentarily block out portions of each of the primary colors for a portion of the frame time. For example, for the left eye, the lower wavelength spectrum of Red, Blue, and Green (RGB) would be blocked for a period of time. This would be followed by blocking the higher wavelength spectrum of Red, Blue, and Green (RGB) for the other eye. The appropriate color adjusted stereo content that is associated with each eye is presented to each modulator for the eye. The viewer wears a corresponding filter set that similarly transmits only one of the two 3-color (RGB) spectral sets. This system is advantaged over a polarization based projection system in that its images can be projected onto most screens without the requirement of utilizing a custom polarization-maintaining screen. It is similarly advantaged in that polarization properties of the modulator or associated optics are not significant in the performance of the approach. It is disadvantaged, however, in that the filter glasses are expensive and the viewing quality can be reduced by angular shift, head motion, and tilt. The expensive glasses are also subject to scratch damage and theft causing financial difficulties for the venue owners. Additionally, adjustment of the color space can be difficult and there is significant light loss due to filtering, leading to either a higher required lamp output or reduced image brightness.

The second approach utilizes polarized light. One method, assigned to InFocus Corporation, Wilsonville, OR, in US Patent No. 6,793,341 to Svardal et al., utilizes each of two orthogonal polarization states delivered to two separate spatial light modulators. Polarized light from both modulators is projected simultaneously. The viewer wears polarized glasses with polarization transmission axes for left and right eyes orthogonally oriented with respect to each other. Although this arrangement offers efficient use of light, it can be a very expensive configuration, especially in projector designs where a spatial light modulator is required for each color band. In another more common approach using polarization, a conventional digital projector is modified to modulate alternate polarization states that are rapidly switched from one to the other. This can be done, for example, where a DLP projector has a polarizer placed in the output path of the light, such as at a position 16 indicated by a dashed line in Figure 1. The polarizer is required as the DLP is not inherently designed to maintain the polarization of the input light as the window of the device package depolarizes due to stress induced birefringence. An achromatic polarization switcher, similar to the type described in US application 200610291053 by Robinson et al. could be used at position 16 after the polarizer. A switcher of this type alternately rotates polarized light between two orthogonal polarization states, such as linear polarization states, to allow the presentation of two distinct images, one to each eye, while the user wears polarized glasses.

Real-D systems historically have utilized left and right circularly polarized light, where the glasses are made of a combination ¼ wave retarder plus a polarizer to change the circularly polarized light back to linearly polarized light before blocking one state. This apparently is less sensitive to head tilt and the achromatic polarization switcher is easier to fabricate. The glasses, however, add expense over embodiments that simply use a polarizer. In either case, the display screen must substantially maintain the polarization state of the incident image-bearing light and is, therefore, typically silvered. Silvered screens are more costly and exhibit angular sensitivity for gain. While this system is of some value, there is a significant light loss with MEMS (Micro-Electro-Mechanical-System) based systems since they require polarization, which reduces the output in half. Similarly, there is additional light loss and added cost from the polarization switcher. LCOS based projectors that utilize this method are advantaged over typical MEMS based projectors in that the output is typically already polarized for the device to function. Thus no significant loss is obtained by polarizing the output light. These projectors are, however, commonly more costly due to the difficulty of maintaining high polarization control through high angle optics. Therefore any gains in efficiency are somewhat offset by other costs.

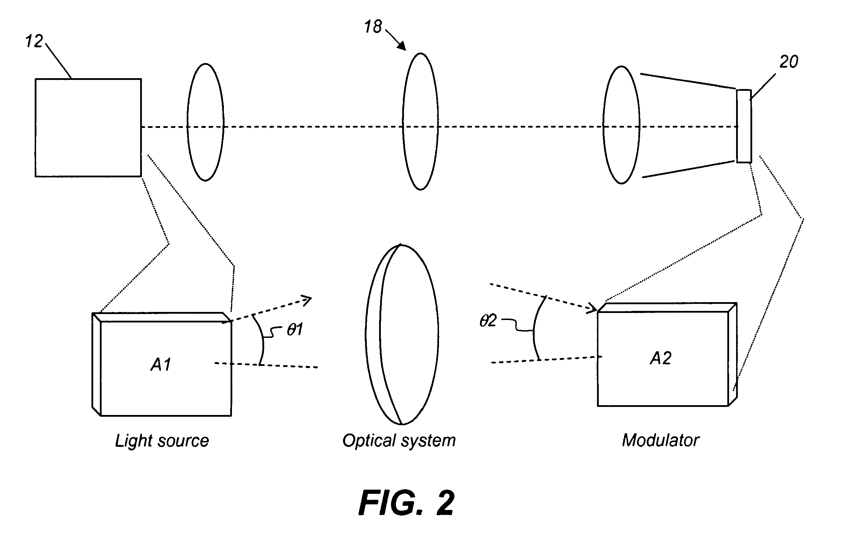

A continuing problem with illumination efficiency relates to etendue or, similarly, to the Lagrange invariant. As is well known in the optical arts, etendue relates to the amount of light that can be handled by an optical system. Potentially, the larger the etendue, the brighter the image will be. Numerically, etendue is proportional to the product of two factors, namely the image area and the numerical aperture. In terms of the simplified optical system represented in Figure 2 having light source 12, optics 18, and a spatial light modulator 20, etendue is a factor of the area of the light source A I and its output angle θ1 and is equal to the area of the modulator A2 and its acceptance angle θ2. For increased brightness, it is desirable to provide as much light as possible from the area of the light source 12. As a general principle, the optical design is advantaged when the etendue at the light source is most closely matched to the etendue at the modulator.

Increasing the numerical aperture, for example, increases etendue so that the optical system captures more light. Similarly, increasing the source image size, so that light originates over a larger area, increases etendue. In order to utilize an increased etendue on the illumination side, the etendue must be greater than or equal to that of the illumination source. Typically, however, larger images are more costly. This is especially true of devices such as LCOS and DLP components, where the silicon substrate and defect potential increase with size. As a general rule, increased etendue results in a more complex and costly optical design. Using an approach such as that outlined in U.S. Patent No. 5,907,437 (Sprotbery et al.) for example, lens components in the optical system must be designed for large etendue. The source image area for the light that must be converged through system optics is the sum of the combined areas of the spatial light modulators in red, green, and blue light paths; notably, this is three times the area of the final multicolor image formed. That is, for the configuration disclosed in U.S. Patent No. 5,907,437, optical components handle a sizable image area, therefore a high etendue, since red, green, and blue color paths are separate and must be optically converged. Moreover, although a configuration such as that disclosed in U.S. Patent No. 5,907,437 handles light from three times the area of the final multicolor image formed, this configuration does not afford any benefit of increased brightness, since each color path contains only one-third of the total light level.

Efficiency improves when the etendue of the light source is well matched to the etendue of the spatial light modulator. Poorly matched etendue means that the optical system is either light starved, unable to provide sufficient light to the spatial light modulators, or inefficient, effectively discarding a substantial portion of the light that is generated for modulation.

The goal of providing sufficient brightness for digital cinema applications at an acceptable system cost has eluded designers of both LCD and DLP systems. LCD-based systems have been compromised by the requirement for polarized light, reducing efficiency and increasing etendue, even where polarization recovery techniques are used. DLP device designs, not requiring polarized light, have proven to be somewhat more efficient, but still require expensive, short-lived lamps and costly optical engines, making them too expensive to compete against conventional cinema projection equipment.

In order to compete with conventional high-end film-based projection systems and provide what has been termed electronic or digital cinema, digital projectors must be capable of achieving comparable cinema brightness levels to this earlier equipment. As some idea of scale, the typical theatre requires on the order of 10,000 lumens projected onto screen sizes on the order of 40 feet in diagonal. The range of screens requires anywhere from 5,000 lumens to upwards of 40,000 lumens. In addition to this demanding brightness requirement, these projectors must also deliver high resolution (2048 x 1080 pixels) and provide around 2000:1 1 contrast and a wide color gamut.

Some digital cinema projector designs have proved to be capable of this level of performance. However, high equipment cost and operational costs have been obstacles. Projection apparatus that meet these requirements typically cost in excess of $50,000 each and utilize high wattage Xenon arc lamps that need replacement at intervals between 500-2000 hours, with typical replacement cost often exceeding $1000. The large etendue of the Xenon lamp has considerable impact on cost and complexity, since it necessitates relatively fast optics to collect and project light from these sources.

One drawback common to both DLP and LCOS LCD spatial light modulators (SLM) has been their limited ability to use solid-state light sources, particularly laser sources. Although they are advantaged over other types of light sources with regard to relative spectral purity and potentially high brightness levels, solid-state light sources require different approaches in order to use these advantages effectively. Using conventional methods and devices for conditioning, redirecting, and combining light from color sources, as was described with earlier digital projector designs, can constrain how well laser array light sources are used.

Solid-state lasers promise improvements in etendue, longevity, and overall spectral and brightness stability but, until recently, have not been able to deliver visible light at sufficient levels and at costs acceptable for digital cinema. In a more recent development, VCSEL(Vertical Cavity Surface-Emitting Laser) laser arrays have been commercialized and show some promise as potential light sources. However, brightness itself is not yet high enough; the combined light from as many as 9 individual arrays is needed in order to provide the necessary brightness for each color.

Examples of projection apparatus using laser arrays include the following:
U.S. Patent No. 5,704,700 entitled "Laser Illuminated Image Projection System and Method of Using Same" to Kappel et al. describes the use of a microlaser array for projector illumination;
Commonly assigned U.S. Patent No. 6,950,454 to Kruschwitz et al. entitled "Electronic Imaging System Using Organic Laser Array Illuminating an Area Light Valve" describes the use of organic lasers for providing laser illumination to a spatial light modulator;
U.S. Patent Application Publication No. 2006/0023173 entitled "Projection Display Apparatus, System, and Method" to Mooradian et al. describes the use of arrays of extended cavity surface-emitting semiconductor lasers for illumination;
U.S. Patent No. 7,052,145 entitled "Displays Using Solid-State Light Sources" to Glenn describes different display embodiments that employ arrays of microlasers for projector illumination.

U.S. Patent 6,240,116 entitled Laser Diode Array Assemblies With Optimized Brightness Conservation" to Lang et al. discusses the packaging of conventional laser bar- and edge-emitting diodes with high cooling efficiency and describes using lenses combined with reflectors to reduce the divergence-size product (etendue) of a 2 dimensional array by eliminating or reducing the spacing between collimated beams.

There are difficulties with each of these types of solutions. Kappel `700 teaches the use of a monolithic array of coherent lasers for use as the light source in image projection, whereby the number of lasers is selected to match the power requirements of the lumen output of the projector. In a high lumen projector, however, this approach presents a number of difficulties. Manufacturing yields drop as the number of devices increases and heat problems can be significant with larger scale arrays. Coherence can also create problems for monolithic designs. Coherence of the laser sources typically causes artifacts such as optical interference and speckle. It is, therefore, preferable to use an array of lasers where coherence, spatial and temporal coherence is weak or negligible. While spectral coherence is desirable from the standpoint of improved color gamut, a small amount of spectral broadening is also desirable for reducing sensitivity to interference and speckle and also lessens the effects of color shift of a single spectral source. This shift could occur, for example, in a three-color projection system that has separate red, green and blue laser sources. If all lasers in the single color arrays are connected together and of a narrow wavelength, and a shift occurs in the operating wavelength, the white point and color of the entire projector may fall out of specification. On the other hand, where the array is averaged with small variations in the wavelengths, the sensitivity to single color shifts in the overall output is greatly reduced. While components may be added to the system to help break this coherence as discussed by Kappel, it is preferred from a cost and simplicity standpoint to utilize slightly varying devices from different manufactured lots to form a substantially incoherent laser source. In addition, reducing the spatial and temporal coherence at the source is preferred, as most means of reducing this incoherence beyond the source utilizes components such as diffusers that increase the effective extent of the source (etendue), cause additional light loss, and add expense to the system. Maintaining the small etendue of the lasers enables a simplification of the optical train for illumination, which is highly desirable.

Laser arrays of particular interest for projection applications are various types of VCSEL arrays, including VECSEL (Vertical Extended Cavity Surface-Emitting Laser) and NECSEL (Novalux Extended Cavity Surface-Emitting Laser) devices from Novalux, Sunnyvale, CA. However, conventional solutions using these devices have been prone to a number of problems. One limitation relates to device yields. Due largely to heat and packaging problems for critical components, the commercialized VECSEL array is extended in length, but limited in height; typically, a VECSEL array has only two rows of emitting sources. The use of more than two rows tends to dramatically increase yield and packaging difficulties. This practical limitation would make it difficult to provide a VECSEL illumination system for projection apparatus as described in the Glenn '145 disclosure, for example. Brightness would be constrained when using the projection solutions proposed in the Mooradian et al. '3173 disclosure. Although Kruschwitz et al '454 and others describe the use of laser arrays using organic VCSELs, these organic lasers have not yet been successfully commercialized. In addition to these problems, conventional VECSEL designs are prone to difficulties with power connection and heat sinking. These lasers are of high power; for example, a single row laser device, frequency doubled into a two-row device from Novalux produces over 3 W of usable light. Thus, there can be significant current requirements and heat load from the unused current. Lifetime and beam quality is highly dependent upon stable temperature maintenance.

Coupling of the laser sources to the projection system presents another difficulty that is not adequately addressed using conventional approaches. For example, using Novalux NESEL lasers, approximately nine 2 row by 24 laser arrays are required for each color in order to approximate the 10,000 lumen requirement of most theatres. It is desirable to separate these sources, as well as the electronic delivery and connection and the associated heat from the main thermally sensitive optical system to allow optimal performance of the projection engine. Other laser sources are possible, such as conventional edge emitting laser diodes. However, these are more difficult to package in array form and traditionally have a shorter lifetime at higher brightness levels.

Conventional solutions do not adequately address the problems of etendue-matching of the laser sources to the system and of thermally separating the illumination sources from the optical engine. Moreover, conventional solutions do not address ways to effectively utilize lasers effectively to generate stereoscopic digital cinema projection systems. Thus it can be seen that there is a need for illumination solutions that capitalize on the use of multi-wavelength laser light sources for stereoscopic digital cinema projection systems.

Other conventional stereoscopic digital projection systems are disclosed in US 2007/0146880 A1.

### SUMMARY OF THE INVENTION

It is an object of the present invention to address the need for stereoscopic imaging with digital spatial light modulators such as DLP and LCOS and related microdisplay spatial light modulator devices. With this object in mind, the present invention provides a stereoscopic digital image projector system as defined in independent claim 1.

It is a feature of the present invention that it provides ways for improved etendue matching between illumination and modulation components.

These and other objects, features, and advantages of the present invention will become apparent to those skilled in the art upon a reading of the following detailed description when taken in conjunction with the drawings wherein there is shown and described an illustrative embodiment of the invention.

### BRIEF DESCRIPTION OF THE DRAWINGS

While the specification concludes with claims particularly pointing out and distinctly claiming the subject matter of the present invention, it is believed that the invention will be better understood from the following description when taken in conjunction with the accompanying drawings, wherein:
Figure 1 is a schematic block diagram of a conventional projection apparatus using a combining prism for the different color light paths;
Figure 2 is a representative diagram showing etendue for an optical system;
Figures 3A and 3B are plan views showing the relative fill factor of different solid-state light array-to-light guide combinations;
Figure 3C is a graph illustrating spectrally adjacent bands of the present invention;
Figure 4 is a schematic block diagram showing the general arrangement of a projection apparatus using the illumination combiner of the present invention for stereo projection;
Figures 5 and 6 are respectively a schematic side-view diagram and a perspective view diagram both illustrating how adjacent spectral light from multiple solid-state light arrays can be provided along the same illumination path;
Figure 7A is a schematic side-view diagram illustrating the use of a. dichroic beamsplitter for directing illumination of one spectral band from multiple solid-state light arrays in one embodiment;
Figure 7B is a schematic side-view diagram illustrating the use of a dichroic beamsplitter for directing illumination of an adjacent spectral band from multiple solid-state light arrays in one embodiment;
Figure 8 is a timing diagram that illustrates the alternating timing of adjacent spectral bands used for stereo image presentation;
Figure 9A is a schematic side-view diagram illustrating the use of a light-redirecting prism for combining illumination from multiple solid-state light arrays in one embodiment;
Figure 9B is a perspective view of the light-redirecting prism of Figure 9A;
Figure 10 is a schematic side view of a light-redirecting prism in an alternate embodiment;
Figure 11 is a schematic side view showing the use of two light-redirecting prisms for providing light of dual adjacent spectral bands from a solid-state light array;
Figure 12 is a schematic side view showing the use of an embodiment of a light-redirecting prism that accepts light from both sides;
Figure 13 is a schematic side view of an illumination apparatus using a light-redirecting prism of Figure 12 for light of each adjacent spectral band;
Figure 14 is a schematic diagram of a projection apparatus using dual adjacent spectral bands with the light-redirecting prisms of Figure 12;
Figure 15 is a schematic diagram of an alternate projection apparatus using dual adjacent spectral bands with the light-redirecting prisms of Figure 12, without light guides;
Figure 16 is a schematic side view of an illumination apparatus using a light-redirecting prism of Figure 12 for each adjacent spectral band and an rotating optical shutter to distinguish illuminating spectrum; and
Figure 17 is a schematic front view of an optical shutter that is half transmitting and half reflecting for the adjacent spectral bands.

### DETAILED DESCRIPTION OF THE INVENTION

The present description is directed in particular to elements forming part of, or cooperating more directly with, apparatus in accordance with the invention. It is to be understood that elements not specifically shown or described may take various forms well known to those skilled in the art.

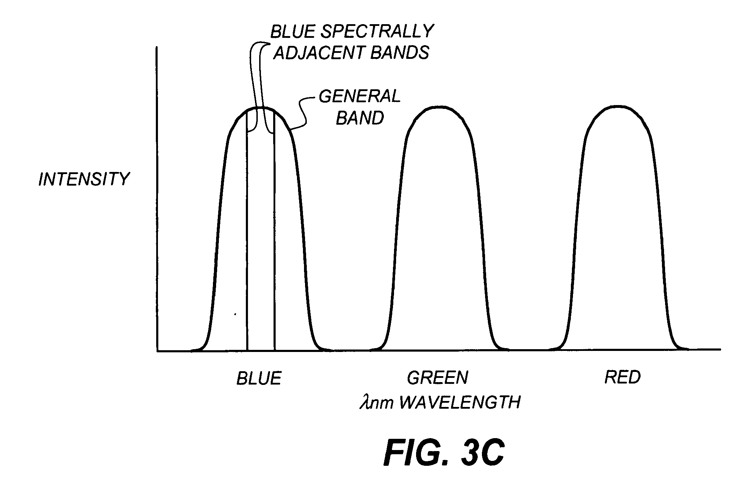

This invention requires the use of a spectrally adjacent wavelength band. This term refers to substantially distinctive neighboring wavelength regions within a particular color spectrum. For example, and referring to Fig. 3C, typical digital display systems are often composed of three or more general color spectrums, defined as blue, green, and red. These may be composed of wavelength regions of between 30nm to 100 nm in spectral width. Within these color spectrums, smaller adjacent subsets can be defined. An example of this would be the blue color spectrum, which may be between 420nm and 460nm. Two spectrally adjacent bands may be comprised of spectrums of 420 to 430nm and 440 to 450nm. Both of these are within the general color spectrum band; however, they are also spectrally distinct. With the use of laser light sources, these spectrally adjacent colors would likely be narrower, as the laser spectrums are inherently narrow. Their spatial separation is defined by the requirements of any coatings that may be used to either combine the adjacent spectral bands or reject the adjacent spectral band. This small separation between the adjacent spectral bands enables the least variation in color space and the widest color gamut of the projection system. Therefore it is desirable to have these bands as close together as practical within the ability to fabricate a reasonable filter and also remain inside the general color spectrum.

Figures shown and described herein are provided to illustrate principles of operation according to the present invention and are not drawn with intent to show actual size or scale. Because of the relative dimensions of the component parts for the laser array of the present invention, some exaggeration is necessary in order to emphasize basic structure, shape, and principles of operation.

Embodiments of the present invention address the need for improved brightness in a stereoscopic viewing system using adjacent dual spectral sources and provide solutions that can also allow ease of removal and modular replacement of illumination assemblies. Embodiments of the present invention additionally provide features that reduce thermal effects that might otherwise cause thermally induced stress birefringence in optical components that are used with polarization-based projectors. Embodiments of the present invention take advantage of the inherent polarization of light that is emitted from a VECSEL laser array or other type of solid-state light array.

One approach used to reduce thermal loading by embodiments of the present invention is to isolate the light sources from light modulation components using a waveguide structure. Light from multiple solid-state light source arrays is coupled into optical waveguides that deliver the light to the modulation device. When this is done, the geometry of the light source-to-waveguide interface can be optimized so that the waveguide output is well matched to the aspect ratio of the spatial light modulator. In practice, this means that the waveguide aperture is substantially filled or slightly underfilled for maintaining optimal etendue levels. This arrangement also helps to minimize the speed requirement of illumination optics.

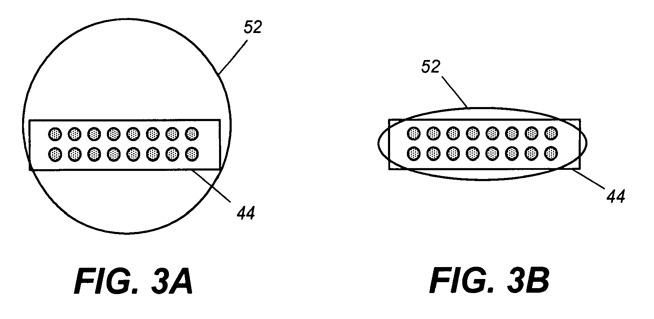

Referring to Figures 3A and 3B, the input aperture of a light guide 52 is shown in cross section. A solid-state light array 44 is shown as it would appear at the input aperture of light guide 52, if properly scaled. As shown in Figure 3A, the aperture is underfilled, which may easily cause a poor etendue match at the spatial light modulator end of light guide 52. In Figure 3B, the aspect ratios of array 44 and light guide 52 are well matched by reshaping the input aperture of light guide 52 from its conventional circular form. Methods of combining multiple arrays 44 are described subsequently. In embodiments using this approach, an optical fiber can be utilized for light guide 52. In one embodiment, a rectangular core optical fiber is used. For example, rectangular core fiber from Liekki of Lohaja, Finland has been fabricated to better match source aspect ratios.

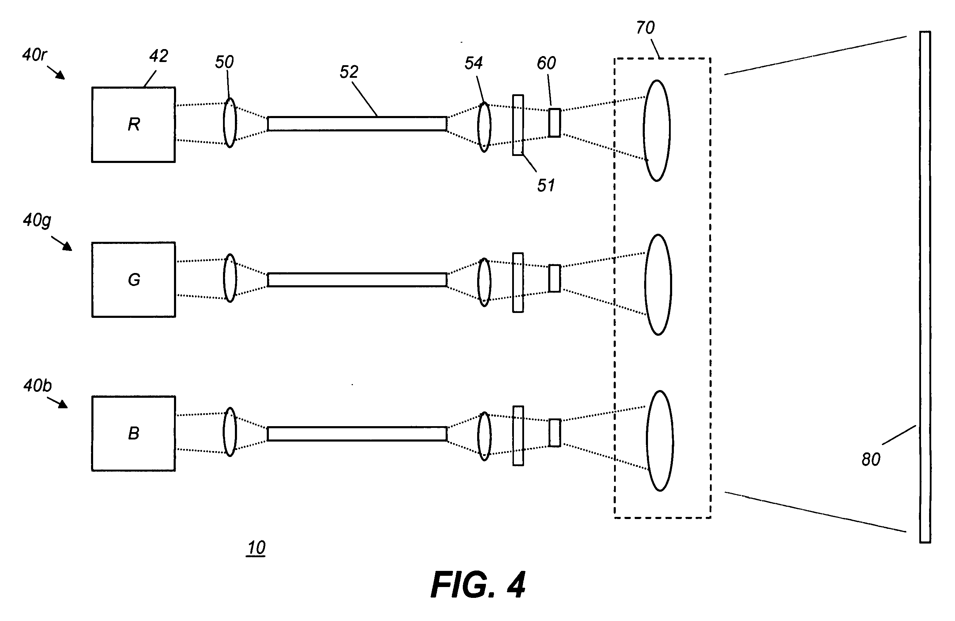

In order to better understand the present invention, it is instructive to describe the overall context within which apparatus and methods of the present invention can be operable. The schematic diagram of Figure 4 shows a basic arrangement for projection apparatus 10 that is used in a number of embodiments of the present invention. Three light modulation assemblies 40r, 40g, and 40b are shown, each modulating one of the primary Red, Green, or Blue (RGB) color bands from an illumination combiner 42. In each light modulation assembly 40r, 40g, and 40b, an optional lens 50 directs light into a light guide 52, such as an optical fiber. At the output of light guide 52, a lens 54 directs light through an integrator 51, such as a fly's eye integrator or integrating bar, for example, to a spatial light modulator 60, which may be a DLP, LCOS or other modulating component. For use with LCOS, it is preferred to maintain the polarization, highly polarized state of the light, when polarized lasers are used. In the case of DLP modulators, this is unnecessary. Projection optics 70, indicated generally in a dashed outline in Figure 4 due to many possible embodiments, then directs the modulated light to a display surface 80. The overall arrangement shown in Figure 4 is then used for subsequent embodiments of the present invention, with various arrangements used for illumination combiner 42. Illumination combiner 42 alternately provides light of adjacent spectral bands, thus providing alternate left- and right-eye views in rapid succession.

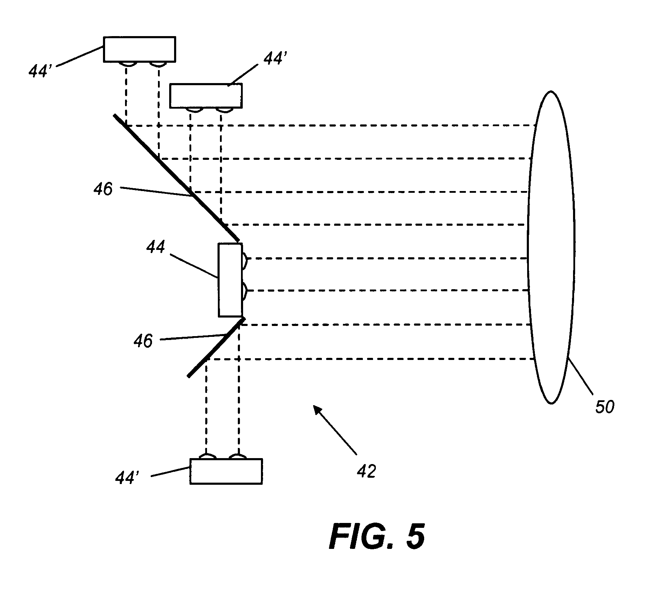

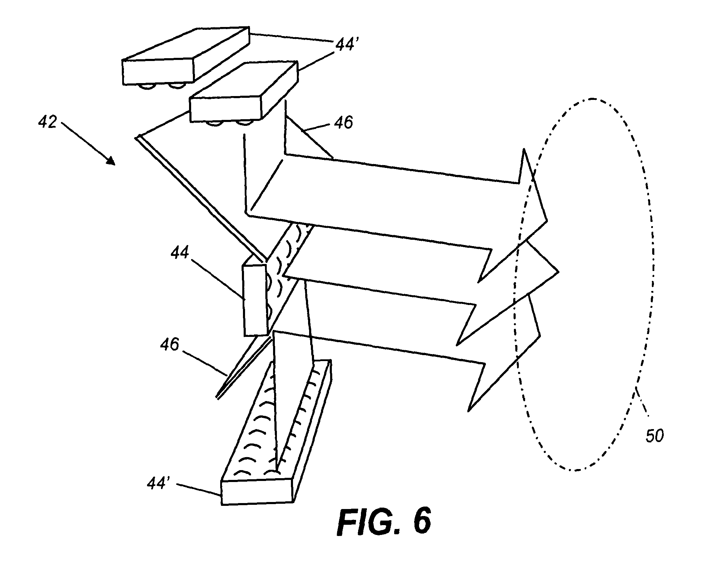

Figure 5 shows one approach for combining multiple arrays 44 and 44' to form a larger array. Figure 6 shows the configuration of Figure 5 in perspective view. In Figure 5, one or more interspersed mirrors 46 may be used to place the optical axis of additional arrays 44' in line with array 44. However, it can be appreciated that heat and spacing requirements may limit how many arrays 44 can be stacked in this manner

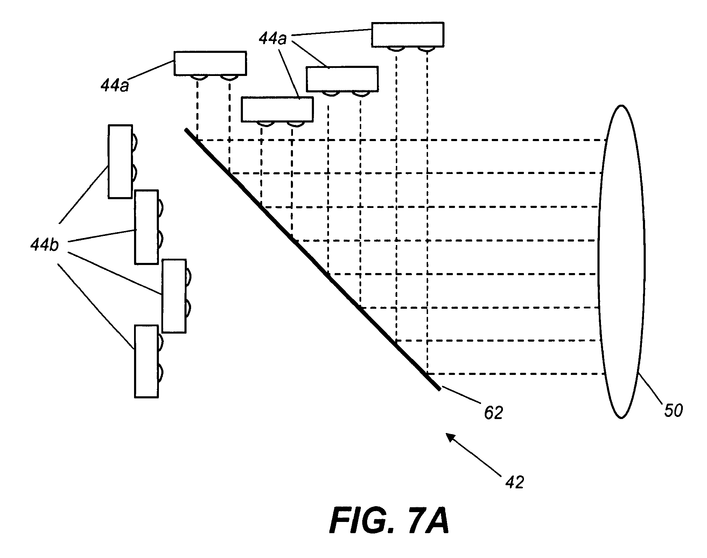

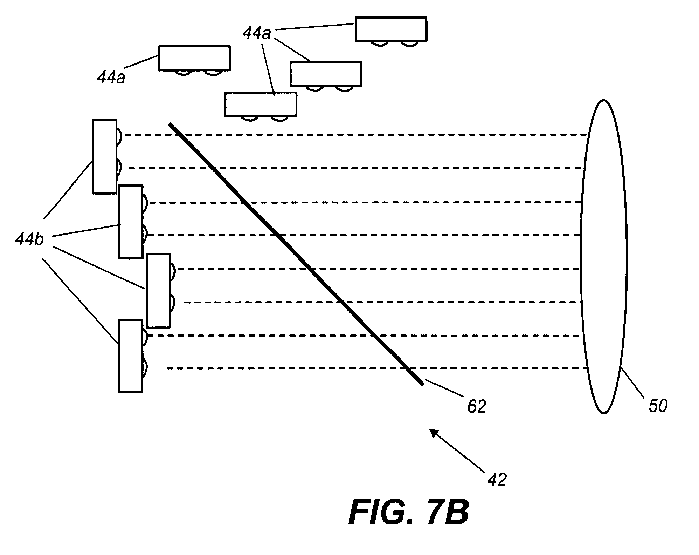

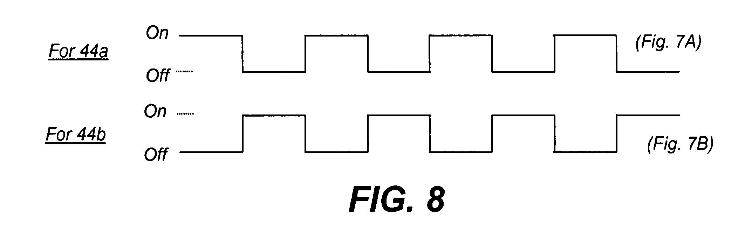

The arrangements shown in Figures 5 and 6 can be modified somewhat to allow the use of light having different, or shifted adjacent spectral content, as shown in Figures 7A and 7B and in the timing chart of Figure 8. Figures 7A and 7B illustrate the illumination combiner 42, and the timing diagram of Figure 8 shows, within any one of light modulation assemblies 40r, 40g, and 40b, how light that is directed to the same spatial light modulator 60 (Figure 4) can be rapidly alternated between two adjacent color spectrums to provide left- and right-eye images accordingly. There are two banks of lasers, for example purposes, solid-state laser arrays are shown, 44a and 44b. Lasers 44a and 44b provide light adjacent spectral bands. The viewer then wears filtered glasses to separate out and selectively transmit the single wavelength band intended for viewing, while blocking at the adjacent wavelength band intended for the alternate eye. The duty cycle shown in Figure 8 is 50% illumination for each eye. Shorter duty cycles are possible, as long as the average power density on each eye is the same. The optimum duty cycle and frequency rate must be selected by the operational speed of the spatial light modulator, the operational speed of the laser device and the necessity to minimize discomfort by the viewer. A typical minimum acceptable frequency of 120hz refresh rate is desired, while higher frequencies are preferred. In 3D DLP based Digital Cinema applications, 144hz is often used.

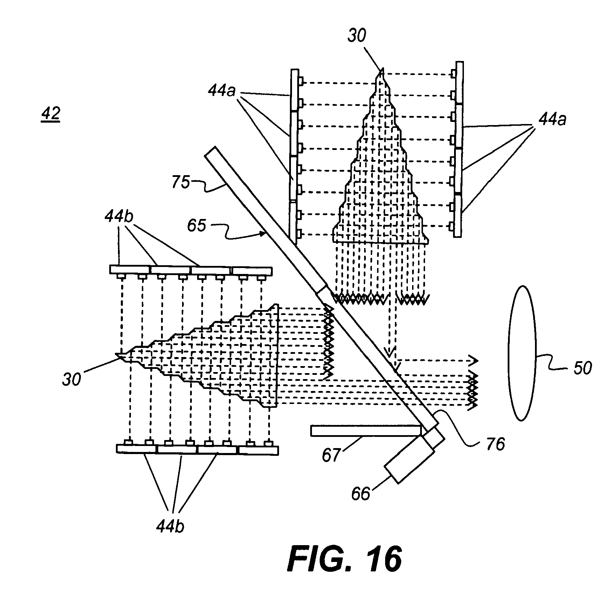

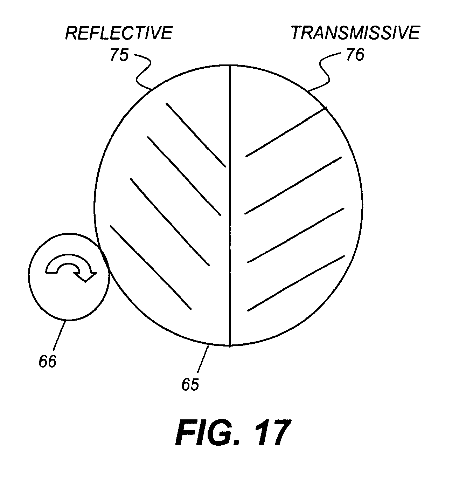

In some instances it may not be practical to operate the lasers in a modulating fashion at the required frequency for quality stereoscopic imaging. For example, laser instability may occur when driving the laser in such a manner, thereby causing undesirable or uncontrollable laser power fluctuation. An alternative embodiment of this invention is to utilize fixed operation lasers, (may be modulated, but not for stereoscopic purposes), in combination with an optical shutter. Figures 16 and 17 show optical shutter 65 that is rotated in synchronization with the spatial light modulators by motor 66. Figure 17 illustrates that the optical shutter 65 includes a reflective portion 75 and a transmissive portion 76. When reflective portion 75 in rotated into the optical path of light from 44a and 44b the light from 44a is reflected into the optical system for projection, while the light from 44b is reflected to beam dump 67. Similarly, when transmissive portion 76 is rotated into the optical path of light from 44a and 44b, the light from 44b transmits to the optical system for projection, while the light from 44a transmits to the beamdump. Thereby the rotation of portions 75 and 76 provide optical system illumination that alternates between the two adjacent color bands from 44a and 44b. In the simplified case, the light from 44a and 44b are simultaneously reflected for 50% of the time corresponding to the image set on the spatial light modulator destined for the eye allowing the spectrum from illumination source 44a. Light from 44a is reflected off of optical shutter 65 and delivered to the spatial light modulator which is then projected to the screen for viewing by the user wearing color selective filter glasses allowing only light from adjacent spectrum 44a. Light from illumination source 44b is reflected into beam dump 67. Likewise, for 50% of the time, optical shutter 65 transmits substantially all of illumination 44a and 44b. In this case, light from 44a ends at the beam dump 67, while light from 44b is delivered to the modulator which images content for the alternate eye. This light reaches the viewer's appropriate eye through the filter glasses designed to transmit only adjacent spectrum 44b.

While this approach has more light loss than the prior embodiment, similar to the prior art, it is easier to implement. The prior art requires the use of a color selective coating to separate the appropriate adjacent spectrums. This must handle all three wavelength bands simultaneously. In this embodiment, a simple mirror may be used for half of the optical shutter (reflective portion), while the other half may be a simple window (transmissive portion). Alternatively, two different wavelengths sensitive coatings designed with shifted edge filter designs may be used. As only one spectral band is required, this is substantially easier to fabricate without specialty coating types. In either case, proper anti reflection coatings may be desired on the substrates to prevent ghost reflections causing crosstalk light from entering the spatial light modulator from the inappropriate adjacent spectral band. Additionally, there may be a desire to allow both adjacent spectral bands through to increase brightness for conventional non-stereoscopic images. In this case, the optical shutter may be removed and the dichroic beamsplitter may be reinserted. This can be automated by the content selection system.

It is desirable to have the spectrums of each of the lasers be adjacent in wavelength to minimize the color shift correction required for each eye to be minimal; conversely, it is also desirable to have enough of a spectral shift such that filters can be designed to sufficiently separate out the light from the left and right eyes, minimizing crosstalk. These filters are typically fabricated by utilizing thin film based edge or bandpass filters. These filters have transition regions of wavelength ranging between a high transmission and blocking typically with smaller transitions (steeper) requiring more costly optical layers. This tradeoff between color space and transition space defines the specific desirable wavelength separation. NESCEL lasers typically have a variation of around .5nm between samples designed for the same spectral band. Therefore, a minimum spectral separation would be 1 nm, provided an optical coating could be designed and fabricated with enough tolerance to have a transition region from full transmission to full blocking within 1nm. More typically, however, a minimum of 5nm would be required for such a coating. Therefore, the coating fabrication cost is often the limiting factor.

In one half of the alternating illumination cycle, arrays 44a are energized, as shown in Figure 7A. This light reflects from a dichroic beamsplitter 62. In the other half of the alternating illumination cycle, arrays 44b are energized, as shown in Figure 7B. This light is transmitted through dichroic beamsplitter 62. For non-stereoscopic applications, the light from both adjacent lasers 44a and 44b may be used together to provide a brighter imager, or used at half power to balance the lifetime each laser source.

This arrangement advantageously puts light of both adjacent spectral bands on the same illumination axis. The etendue of this approach remains the same as shown in the configuration shown earlier for a single channel in Figure 5. Therefore, in non-stereoscopic applications, where both spectral bands are imaged, the brightness of the source effectively doubles. This enables the optical engine to work at the lower etendue of effectively a single source, providing advantages in a slower optical speed and higher contrast. However, in the case where stereo is desired, only a single source is utilized at one particular moment in time, so the effective brightness remains the same as Figure 5B. While the shifted adjacent spectral bands do increase the overall source bandwidth, thereby reducing the possible color gamut, by keeping the wavelengths as near as practical, this effect is reduced. It is desirable to select the combination of left eye spectral bands and subsequently right eye spectral bands such that their white points are a close as possible. The overall width of the selected primary bands (combination of adjacent spectral bands) should be well below the width of conventional Xenon light sources, where typical bands may be as high as 100nm. In the case where lasers are used, a total band including both adjacent spectrums might encompass only 20nm or less, providing sufficient margin for very simple optical coating to be made, as well as a substantially larger color gamut compared with traditional illumination.

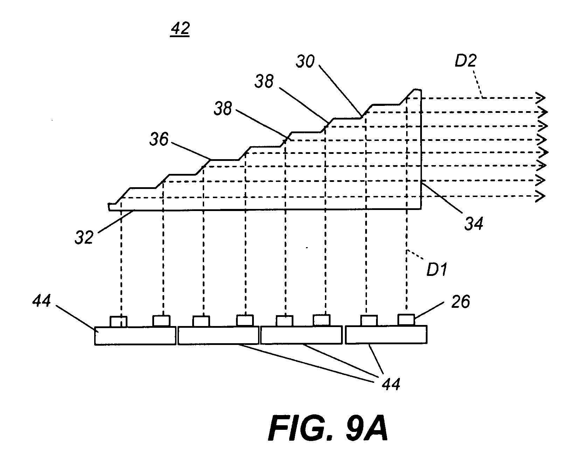

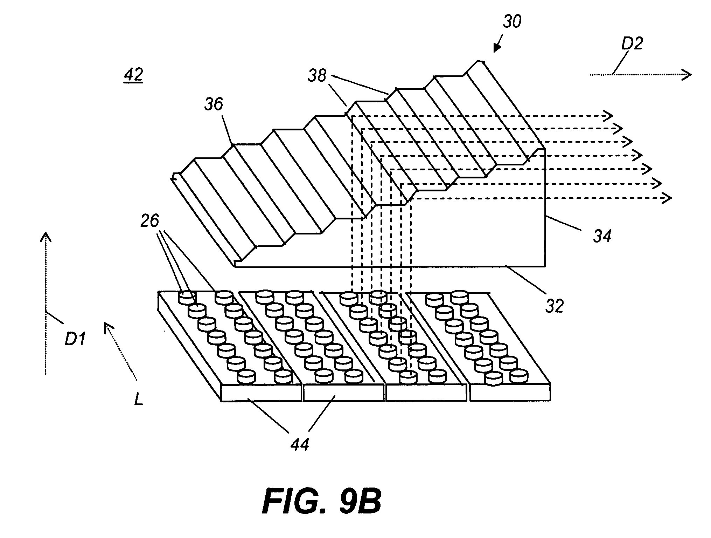

Figures 9A and 9B show side and orthogonal views, respectively, of an embodiment of illumination combiner 42 that combines laser light from four solid-state light arrays 44, concentrated within a smaller area. A light-redirecting prism 30 has an incident face 32 that accepts light emitted from array 44 in an emission direction D1. Light is redirected to an output direction D2 that lies along the direction of the optical axis and is substantially orthogonal to emission direction D1. Light redirecting prism 30 has a redirection surface 36 that has light-redirecting facets 38. Light-redirecting facets 38 are at an oblique angle relative to emission direction D1 and provide Total Internal Reflection (TIR) to light emitted from lasers 26. When staggered as shown in Figures 9A and 9B, these features help to narrow the light path for this illumination, providing a narrower light beam. As Figure 9B shows, light arrays 44 have multiple lasers 26 that extend in a length direction L. Light-redirecting facets 38 and other facets on redirection surface 36 also extend in direction L.

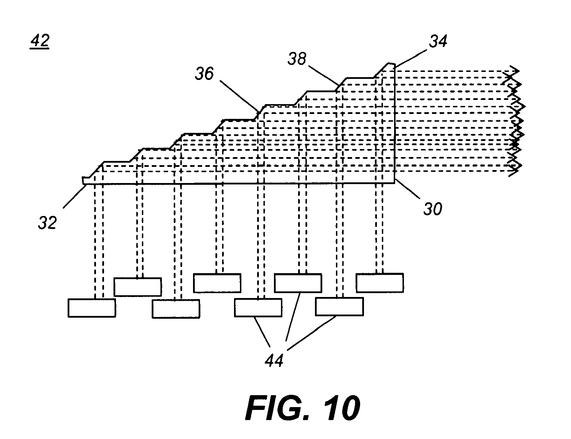

A number of variations are possible. For example, the cross-sectional side view of Figure 10 shows an alternate embodiment in which light-directing facets 38 of light redirecting prism 30 are scaled to redirect light from multiple rows of lasers on light arrays 44 at a time. Incident face 32 may not be normal with respect to emission direction D1, allowing some offset to the arrangement of light arrays 44 and requiring that the index of refraction n of light redirecting prism 30 be taken into account.

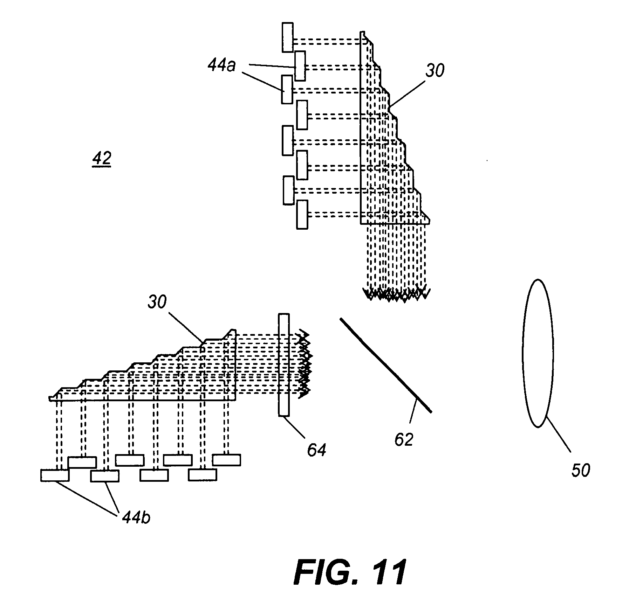

The schematic block diagram of Figure 11 shows how multiple light redirecting prisms 30 can be utilized to provide increased brightness in an embodiment that uses adjacent color bands. As was described earlier with reference to Figures 7A and 7B, alternating illumination from light arrays 44a and 44b, through dichroic beamsplitter 62, direct light of adjacent color bands to spatial light modulator 60 for providing a stereoscopic image.

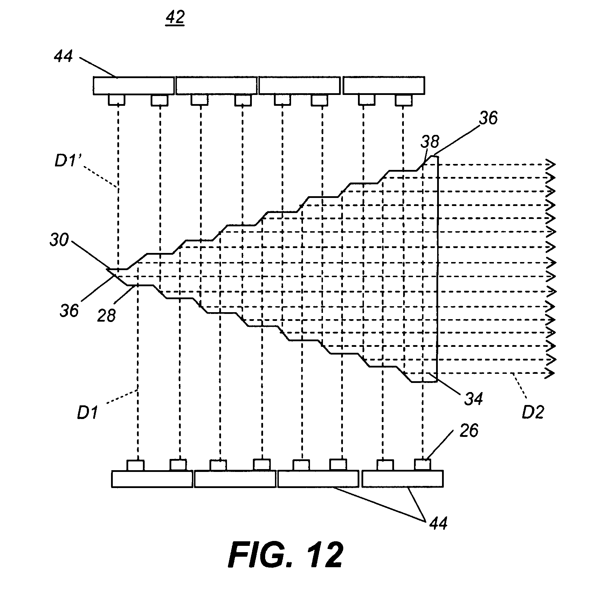

The cross-sectional side view of Figure 12 shows another embodiment of light-redirecting prism 30 in illumination combiner 42 that provides an even more compact arrangement of illumination than the embodiment shown in Figures 9A-10 for using solid-state arrays. In this embodiment, light redirecting prism 30 has two redirection surfaces 36, accepting light from arrays 44 that are facing each other, with opposing emission directions D1 and D1'. Each redirection surface 36 has two types of facets: a light-redirecting facet 38 and an incidence facet 28 that can be normal to the incident light from the corresponding array 44 or at some other angle oblique to normal. This allows for easier alignment of the various laser modules to the light-redirecting prism 30 by retro-reflection of a small residual light from an anti-reflection coated face back into each of the lasers. This retro-reflection can be useful as a means of creating a subtle external cavity that may induce mode instability in laser. While such mode hopping may be considered noise under typical applications, this noise can add value in projection by further reducing the laser coherence (and inter-laser coherence) thereby reducing visual speckle at the image plane. Additionally, with this dual sided approach, laser modules are interleaved with light from differing modules neighboring each other, providing a source of further spatial mixing when the light is optically integrated further in the optical system. This again helps to reduce possible speckle and increase system uniformity. While this light can be image directly to the optical integrator 51, further optical integration and speckle reduction can be provided by instead directing the combined far field illumination instead. With this approach the integrator will need to uniformize essentially a Gaussian beam intensity profile rather than multiple points of light. Some combination of near field illumination and far field illumination may be optimal toward minimizing the etendue of the illumination and maximizing the uniformity of light delivered. Additionally, utilizing more far field illumination provides increased spatial and therefore thermal separation between the illumination sources and the spatial light modulated engine.

While it can be seen that this orientation of the prism 30 to laser 44 shown in Figure 12 is advantaged, normal incidence light with respect to the input or output faces is not required for combining the illumination sources. It is required, however, that the redirected light beams exiting the prism 30 at surface(s) 34 be substantially parallel to each other. Achieving this requires careful consideration of a number of factors. These factors include the combination of the angle of incidence of the lasers 44 on each side (as they may be different) to input facets on each side and the refraction in the prism based on the index of refraction of the material. In addition, the reflection off of the redirecting facets from each side (again, these may be different on each side) must be considered and its combination with the refraction of the prism must cooperate so that output light beams from the exit face(s) are in parallel.

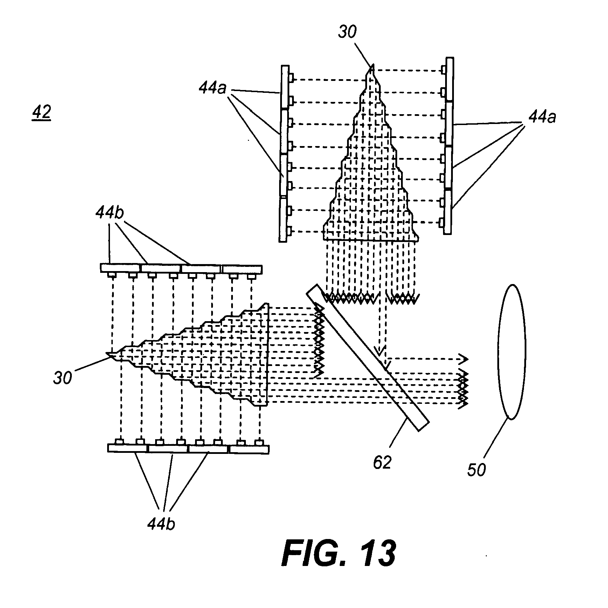

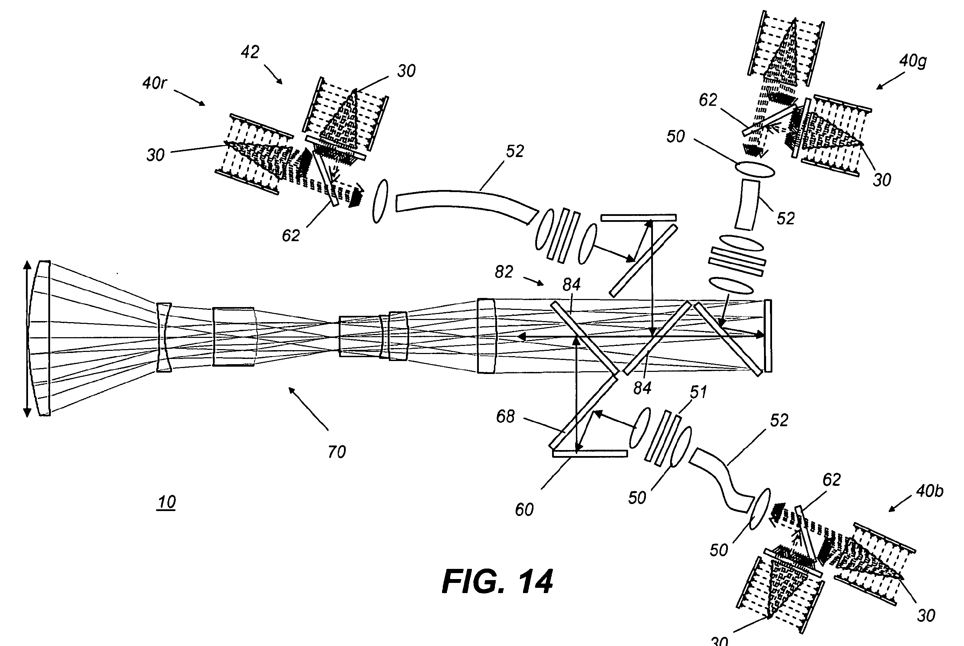

The schematic block diagram of Figure 14 shows an embodiment of projector apparatus 10 that uses light-redirecting prisms 30 in each color channel following the basic arrangement described with respect to Figure 13. Each light modulation assembly 40r, 40g, and 40b has a pair of light redirecting prisms 30 configured with dichroic beam 62. In each light modulation assembly, adjacent spectral band light from one or the other light-redirecting prism 30 is directed through light guide 52 to lens 50 and integrator 51 through dichroic beamsplitter 62. Spatial light modulator 60 is a digital micromirror, LCOS, other device that modulates light. The embodiment shown was designed to use the angular modulation of a micromirror device, but could also be utilized with an LCOS, where thin film coated surface 68 is treated to reflect or transmit incident light according to its incident angle, so that modulated light is directed to a dichroic combiner 82. Dichroic combiner 82 has an arrangement of dichroic surfaces 84 that selectively reflect or transmit light according to wavelength, combining the modulated light from each light modulation assembly 40r, 40g, and 40b onto a single optical path through projection optics 70. The light modulation assemblies 40r, 40g, and 40b consist of the dual adjacent spectral bands; the dichroic surfaces 84 are designed to treat both of these adjacent bands similarly.

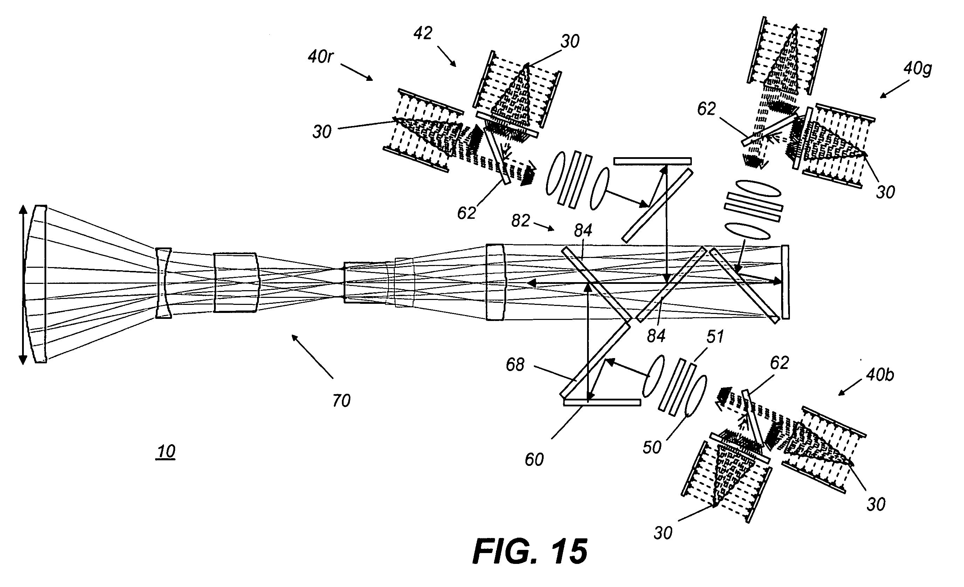

The schematic block diagram of Figure 15 shows an alternate embodiment of projector apparatus 10 in an embodiment similar to that of Figure 14, but without light guides 52. This embodiment can be advantaged because light guides 52 can tend to degrade polarization of the transmitted light. For such an embodiment, lenslet arrays would offer advantages for uniformizing the illumination, since polarization states are maintained.

The present invention allows a number of variations from the exemplary embodiments described herein. For example, a variety of laser light sources could be used as alternatives to VECSEL and other laser arrays. Light directing prism 30 can be made from many highly transmissive materials. For low power applications, plastics may be chosen, with molding processes be used that induce very little stress to the part. Similarly, it is desirable to have the materials chosen such that they induce minimal stress or thermally induced birefringence. Plastics such as acrylic or Zeonex from Zeon Chemicals would be examples of such materials. This is particularly important in the case where light-directing prism 30 is used in a polarization based optical system.

For higher power applications, such as digital cinema where many high power lasers are required, plastics may be impractical for use with light directing prism 30, since the heat buildup from even small level of optical absorption could ultimately damage the material and degrade transmission. In this case, glass would be preferred. Again stress birefringence could be a problem for polarization-based projectors. In this case, glass with low stress coefficient of birefringence, such as SF57, could be used.

Another option would be to use a very low absorption optical glass, such as fused silica, to prevent heat up of the material and therefore keep the birefringence from occurring. These types of materials may not be conducive to creating a molded glass component, thus requiring conventional polishing and or assembly of multiple pieces to make up the completed prism. Where molding is desired, a slow mold process would be preferred, and annealing is desirable to reduce any inherent stress. A clean up polarizer may be desired or necessary to remove any rotated polarization states that might develop from any residual birefringence. This is primarily a trade off of efficiency, component cost and required polarization purity.

Embodiments of the present invention can be useful for shaping the aspect ratio of the light source so that it suits the aspect ratio of the spatial light modulator that is used. Embodiments of the present invention can be used with light guides 52 of different dimensions, allowing the light guide to be not only flexible, but also shaped with substantially the same aspect ratio to that of the modulator. For digital cinema this ratio would be approximately 1.9:1. An alternate embodiment could use a square core fiber. Similarly, a round core optical waveguide, such as common multimode optical fiber can be utilized.

While an optical waveguide between the illumination combiner 42 and integrator 51 is shown for a number of embodiments, it is commonly known that other methods of relaying and separating the illumination sources from the projection optical engine are possible. Relaying with common lenses as shown in Figure 15 is one approach to achieving the desired thermal and spatial separation desired.

The invention has been described in detail with particular reference to certain preferred embodiments thereof, but it will be understood that variations and modifications can be effected within the scope of the invention as defined by the claims. For example, where laser arrays are described in the detailed embodiments, other solid-state emissive components could be used as an alternative. Supporting lenses may also be added to each optical path. In optical assemblies shown herein, the order of the uniformization or light integration and relaying may be reversed without significant difference in effect.

Thus, what is provided is an apparatus and method using independently controlled adjacent spectral band illumination sources for enhanced brightness or stereoscopic digital cinema projection.

### PARTS LIST

- 10: Projector apparatus
- 12: Light source
- 14: Prism assembly
- 16: Position
- 18: Optics
- 20 20r, 20g, 20b.: Spatial light modulator
- 26: Laser
- 28: Incidence facet
- 30: Light redirecting prism
- 32: Incident face
- 34: Output face
- 36: Redirection surface
- 38: Light-redirecting facet
- 40r,: 40g, 40b Light modulation assembly
- 42: Illumination combiner
- 44, 44', 44a, 44b.: Solid-state light array
- 46: Mirror
- 48, 56: Polarization beamsplitter
- 50: Lens
- 51: Integrator
- 52: Light guide
- 54: Lens
- 60: Spatial light modulator
- 62: Dichroic beamsplitter
- 65: Rotating disc optical shutter
- 66: Motor
- 67: Beam Dump
- 68: Dichroic surface
- 70: Projection optics
- 74: Micromirror
- 80: Display surface
- 82: Dichroic combiner
- 84: Dichroic surface
- A.: Axis
- D1, D1'.: Emission direction
- D2: Output direction

## Claims

1. A stereoscopic digital image projector system comprising:
(a) two separately controlled, spectrally adjacent light sources (44, 44'; 44a, 44b), the spectrally adjacent light sources having spectrally adjacent emission spectral bands, both spectral emission bands falling within either a red color spectrum or a green color spectrum or a blue color spectrum;
(b) a dichroic beamsplitter (62) that combines light from the light sources into a single spatial area;
(c) a controller system arranged to alternately provide illumination from each spectrally adjacent light source in conjunction with the corresponding image from the spatial light modulator (60);
(d) a spatial light modulator (60), in the single spatial area that receives the alternating illumination light;
(e) projection optics (50) for delivering imaging light from the spatial light modulator to a projection area; and
(f) filter glasses for a viewer to selectively transmit one adjacent spectral band state to each eye, while rejecting the second adjacent spectral band.

2. The stereoscopic digital image projector system as in claim 1 further comprising at least three color channels each having the first and second spectrally adjacent light sources.

3. The stereoscopic digital image projector system as in claim 1, wherein each light source comprises at least one laser.

4. The stereoscopic digital image projector system as in claim 1, wherein the light sources are polarized.

5. The stereoscopic digital image projector system as in claim 4, wherein polarization is maintained from the light source to the spatial light modulator.

## Patentansprüche

1. Stereoskopisches digitales Bildprojektorsystem mit:
a) zwei separat gesteuerten, spektral benachbarten Lichtquellen (44, 44'; 44a, 44b), welche spektral benachbarte spektrale Emissionsbänder aufweisen, wobei die beiden spektralen Emissionsbänder sich entweder innerhalb eines roten Farbspektrums oder eines grünen Farbspektrums oder eines blauen Farbspektrums befinden;
b) einem dichroitischen Strahlenteiler (62), der von den Lichtquellen stammendes Licht in einem einzelnen Raumbereich zusammenfasst;
c) einem Steuersystem, das derart angeordnet ist, dass es abwechselnd für Beleuchtung von jeder spektral benachbarten Lichtquelle in Verbindung mit dem entsprechenden Bild eines Raumlichtmodulators (60) sorgt;
d) einem Raumlichtmodulator (60) im einzelnen Raumbereich, der das wechselnde Beleuchtungslicht empfängt;
e) einer Projektionsoptik (50) zum Leiten von bilderzeugendem Licht vom Raumlichtmodulator zu einem Projektionsbereich; und mit
f) Filtergläsern für einen Betrachter, um wahlweise ein benachbartes spektrales Band zu jedem Auge zu übertragen, während das zweite benachbarte spektrale Band zurückgewiesen wird.

2. Stereoskopisches digitales Bildprojektorsystem nach Anspruch 1, mit mindestens drei Farbkanälen, die jeweils die erste und zweite spektral benachbarte Lichtquelle aufweisen.

3. Stereoskopisches digitales Bildprojektorsystem nach Anspruch 1, worin jede Lichtquelle mindestens einen Laser umfasst.

4. Stereoskopisches digitales Bildprojektorsystem nach Anspruch 1, worin die Lichtquellen polarisiert sind.

5. Stereoskopisches digitales Bildprojektorsystem nach Anspruch 4, worin die Polarisation von der Lichtquelle bis zum Raumlichtmodulator erhalten bleibt.

## Revendications

1. Système de projection d'images numériques stéréoscopiques comprenant :
(a) deux sources lumineuses spectralement adjacentes, contrôlées individuellement, (44,44' ; 44a,44b), les sources lumineuses spectralement adjacentes ayant des bandes spectrales d'émission spectralement adjacentes, les deux bandes spectrales d'émission se situant dans un spectre de couleur rouge ou dans un spectre de couleur verte ou dans un spectre de couleur bleue ;
(b) un séparateur de faisceau dichroïque (62) qui combine la lumière émise par les sources lumineuses dans une région spatiale unique ;
(c) un système de commande disposé de manière à assurer alternativement l'éclairement par chaque source lumineuse spectralement adjacente en conjonction avec l'image correspondante transmise par le modulateur spatial de lumière (60) ;
(d) un modulateur spatial de lumière (60), dans la région spatiale unique, qui reçoit la lumière d'éclairement alternée ;
(e) une optique de projection (50) pour transmettre la lumière formatrice d'image émise par le modulateur spatial de lumière à une surface de projection ; et
(f) des verres filtrants pour l'observateur permettant de transmettre sélectivement un seul état de bande spectrale adjacente à chaque oeil, tout en rejetant la deuxième bande spectrale adjacente.

2. Système de projection d'images numériques stéréoscopiques selon la revendication 1, comprenant aussi au moins trois canaux de couleur ayant chacun les première et deuxième sources lumineuses spectralement adjacentes.

3. Système de projection d'images numériques stéréoscopiques selon la revendication 1, dans lequel chaque source lumineuse comprend au moins un laser.

4. Système de projection d'images numériques stéréoscopiques selon la revendication 1, dans lequel les sources lumineuses sont polarisées.

5. Système de projection d'images numériques stéréoscopiques selon la revendication 4, dans lequel la polarisation est maintenue de la source lumineuse jusqu'au modulateur spatial de lumière.
